# EUROPÄISCHE PATENTSCHRIFT

(11) **EP 2 105 624 B1**
(45) Veröffentlichungstag und Bekanntmachung des Hinweises auf die Patenterteilung: **18.04.2012**
(21) Anmeldenummer: 09003351.5
(22) Anmeldetag: 07.03.2009
(51) Int. Cl.: F16D 27/00, F01P 7/08

(54) **Elektromagnetisch betätigbare Kupplung sowie Wasserpumpe mit einer elektromagnetisch betätigbaren Kupplung**
Electromagnetically actuated clutch and water pump with an electromagnetically actuated clutch
Embrayage pouvant être actionné de manière électromagnétique et pompe à eau dotée d'un embrayage pouvant être actionné de manière électromagnétique

(30) Priorität: 28.03.2008 DE 102008016277
(43) Veröffentlichungstag der Anmeldung: 30.09.2009
(73) Patentinhaber: LICOS Trucktec GmbH, 88677 Markdorf (DE)
(72) Erfinder: Jürgensmeyer, Jan, 88048 Friedrichshafen (DE); Krafft, Rainer, Dr., 88633 Heiligenberg (DE); Geiger, Sigmund, 88677 Markdorf (DE)
(74) Vertreter: Dobler, Markus

(56) Entgegenhaltungen:
- DE-A1- 3 203 143
- DE-A1- 3 443 524
- DE-A1- 10 158 732

## Beschreibung

Die Erfindung betrifft eine elektromagnetisch betätigbare Kupplung nach dem Oberbegriff des Anspruchs 1 sowie eine Wasserpumpe mit einer solchen Kupplung.

### Stand der Technik

Aus der deutschen Offenlegungsschrift DE 101 58 732 ist ein Antriebsorgan für eine Wasserpumpe des Kühlwasserkreislaufs eines Verbrennungsmotors mit einem Antriebsrad und einer Welle, die mit der Wasserpumpe gekoppelt ist, bekannt. Zur Momentenübertragung ist zwischen Antriebsrad und Welle eine elektromagnetisch betätigbare Reibscheibenkupplung sowie eine zweite Kupplungsvorrichtung in Form einer Wirbelstromkupplung vorgesehen, die die Welle mitschleppt, wenn die Reibschaltkupplung außer Eingriff ist. Mit einer solchen Einheit lassen sich die regelmäßig vorkommenden Betriebssituation in einem modernen Kühlsystem für Verbrennungsmotoren abdecken.

### Aufgaben und Vorteile der Erfindung

Der Erfindung liegt die Aufgabe zugrunde, eine Kupplung bereitzustellen, mit welcher insbesondere der Antrieb einer Kühlwasserpumpe bei Verbrennungsmotoren zuverlässig gestaltet werden kann.

Diese Aufgabe wird durch die Merkmale des Anspruchs 1 und 8 gelöst.

In den abhängigen Ansprüchen sind vorteilhafte und zweckmäßige Weiterbildungen der Erfindung angegeben.

Die Erfindung geht von einer elektromagnetisch betätigbaren Kupplung für eine Wasserpumpe des Kühlwasserkreislaufs eines Verbrennungsmotor aus, die ein Antriebsrad besitzt, das im Bereich oder an der Wasserpumpe drehbar gelagert werden kann. Außerdem ist eine Ankerscheibe vorgesehen, die mit einer Spule zusammen wirkt. Der Kern der Erfindung liegt nun darin, dass die Ankerscheibe und ein erstes Funktionsteil einer Wirbelstromkupplung mit dem Antriebsrad derart in Verbindung steht, dass das Antriebsrad, die Ankerscheibe und das erste Funktionsteil bei Rotation synchron laufen, wobei die Ankerscheibe mit dem Funktionsteil der Wirbelstromkupplung axial durch Bestromung der Spule bewegbar ist. Vorzugsweise ist die Ankerscheibe mit dem ersten Funktionsteil nicht nur drehfest, sondern auch in axialer Richtung fest verbunden. Darüber hinaus ist ein zweites Funktionsteil der Wirbelstromkupplung vorgesehen, das zur festen Anordnung auf einer Welle, die mit der Wasserpumpe gekoppelt ist, ausgebildet ist, und dass Reibmittel zwischen dem ersten und den zweiten Funktionsteil der Wirbelstromkupplung vorgesehen sind, wobei in Abhängigkeit des Abstands des ersten Funktionsteils vom zweiten Funktionsteil durch axiales Verschieben des ersten Funktionsteils ein Reibschluss zwischen den beiden Funktionsteilen durch die Reibmittel ausbildbar ist.

Mit dieser Vorgehensweise wird eine so genannte "Fail Safe"-Anordnung geschaffen, bei welcher ein Antrieb einer Wasserpumpe auch im stromlosen Zustand der Spule ermöglicht ist, z.B. bei einem Ausfall der elektrischen Versorgung. Wenn die Spule bestromt ist, entstehen Feldlinien, die die Ankerscheibe in Richtung Antriebsrad ziehen. Dadurch wird der axiale Abstand des ersten und zweiten Funktionsteils der Wirbelstromkupplung vorzugsweise so verändert, dass die Reibmittel zwischen dem ersten und zweiten Funktionsteil nicht zur Wirkung kommen, sondern eine Relativbewegung des ersten Funktionsteils und zweiten Funktionsteils auftritt. Durch eine Differenzdrehzahl zwischen den beiden Funktionsteilen der Wirbelstromkupplung werden in einem Funktionsteil Wirbelströme ausgebildet, wodurch das zweite Funktionsteil, dass mit der Wasserpumpe gekoppelt ist, über die Wirbelstromkupplung auf einer Schleppdrehzahl angetrieben wird. Die Schleppdrehzahl ist geringer als die Antriebsdrehzahl des Antriebsrads. In diesem Zustand findet eine Drehmomentübertragung über die Wirbelstromkupplung somit berührungfrei statt.

Für den Fall, dass die Spule nicht bestromt ist, z.B. wenn ein elektrischer Ausfall stattgefunden hat, führen vorzugsweise magnetische Kräfte zwischen dem ersten und zweiten Funktionsteil der Wirbelstromkupplung dazu, dass die beiden Funktionsteile eine Anziehungskraft aufeinander ausüben, wodurch das axial bewegbare erste Funktionsteil zum zweiten Funktionsteil hingezogen wird. Dadurch können die Reibmittel in Reibschluss kommen, wodurch die Wasserpumpe über das Antriebsrad und die im Reibschluss stehenden ersten und zweiten Funktionsteile der Wirbelstromkupplung bei maximalem Reibschluss mit der Drehzahl des Antriebsrads angetrieben wird. Somit ist auch bei einem Stromausfall der Antrieb der Wasserpumpe gewährleistet.

Vorzugsweise umfasst das erste Funktionsteil der Wirbelstromkupplung ein Rotationselement mit Dauermagneten, wogegen beispielsweise das zweite Funktionsteil ein Rotationselement mit einer Wirbelstromzone aufweist. Hierbei kann es sich um einen Bereich vor einem eingegossenen Stahlring handeln, der eine Verbesserung des Feldverlaufs bewirkt. Denkbar ist auch, dass Dauermagnete und Wirbelstromzonen am ersten und zweiten Funktionsteil alternieren oder die Wirbelstromzone am ersten Funktionsteil ausgebildet ist.

In einer besonders bevorzugten Ausgestaltung der Erfindung ist die Wirbelstromzone im zweiten Funktionsteil ausgebildet. Bei zweiten Funktionsteil, dass mit einer Welle verbunden ist, die eine Kopplung zur Wasserpumpe aufweist, kann vergleichsweise einfach ein Kühlorgan zur Kühlung der Wirbelstromzone ausgebildet werden.

In diesem Fall sind am ersten Funktionsteil vorzugsweise Permanentmagnete angeordnet. Zur Positionierung der Permanentmagnete kann ein Distanzring eingesetzt werden, der vorzugsweise Aussparrungen für die Permanentmagnete besitzt. Die Permanentmagnete können magnetisch gehalten sein.

Als Reibmittel kann z.B. ein Reibbelag zum Einsatz kommen, der am ersten und/oder zweiten Funktionsteil der Wirbelstromkupplung angeordnet ist. Denkbar ist z.B. ein Reibbelagring, welcher am zweiten Funktionsteil befestigt ist.

### Zeichnungen

Ein Ausführungsbeispiel der Erfindung ist in den Zeichnungen dargestellt und wird nachstehend unter Angabe weiterer Vorteile und Einzelheiten näher erläutert. Es zeigen:

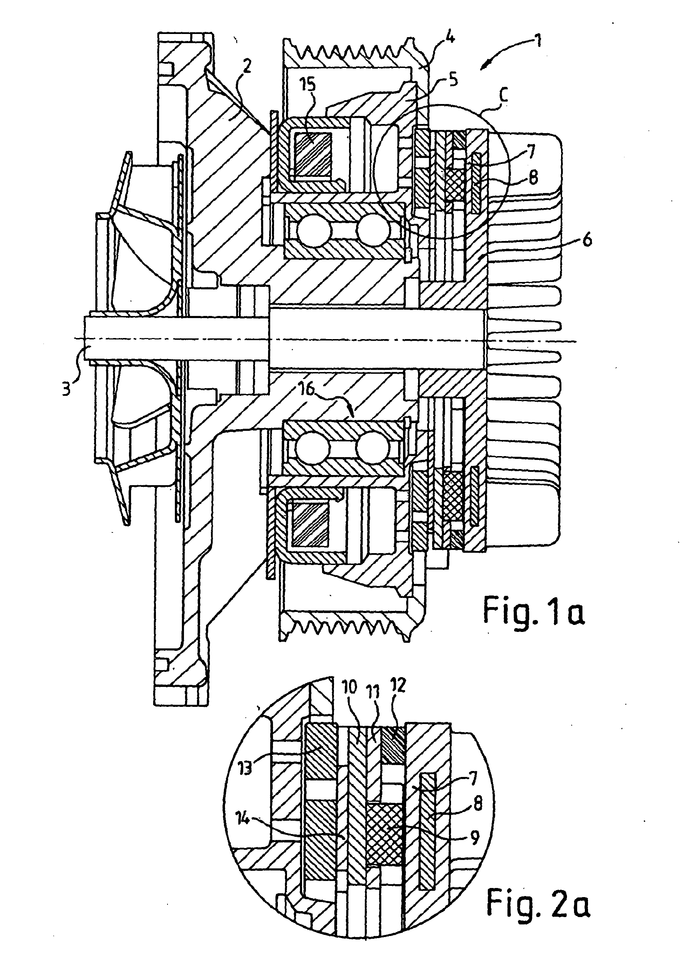

- Figur 1a: eine erfindungsgemäße elektromagnetisch betätigbare Kupplung in einer Schnittansicht an der Antriebswelle einer Wasserpumpe und einen teilweise dargestellten Motorblock und
- Figur 2a: eine vergrößerte Darstellung des in Fig. 1a mit C bezeichneten Ausschnitts.

### Beschreibung des Ausführungsbeispiels

In den Figuren ist eine Wasserpumpenkupplung 1 dargestellt, die an einem Wasserpumpengehäuse 2 sowie an einer aus dem Gehäuse 2 heraustretenden Antriebswelle 3 einer Wasserpumpe angeordnet ist. Die Wasserpumpenkupplung 1 umfasst eine Riemenscheibe 4, die permanent von z.B. einem Verbrennungsmotor über einen Keilriemen (nicht dargestellt) angetrieben wird. Die Riemenscheibe 4 ist über ein Lager 16 unabhängig vom Gehäuse 2 und der Antriebswelle 3, z.B. am Gehäuse 2 drehbar gelagert und mit einem Rotor 5 fest verbunden. Die Riemenscheibe 4 rotiert z.B. mit der Motordrehzahl oder einem vielfachen davon. Auf der Antriebswelle 3 der Wasserpumpe ist ein Kühlring 6 fest montiert. Der Kühlring 6 enthält eine Wirbelstromzone 7 und für eine verbesserte Magnetfeldführung einen eingegossenen Stahlring 8.

Dem Kühlring 6 gegenüberliegend sind Permanentmagnete 9 angeordnet, die auf einem Dauermagnetträger 10 befestigt und z.B. über einen metallischen Distanzring 11 in ihrer jeweiligen Position gehalten werden.

Dem Distanzring 11 gegenüberliegend ist ein Reibbelag 12 angeordnet, der fest mit dem Kühlring 6 in Verbindung steht. Der Dauermagnetträger 10 ist mit einer Ankerscheibe 13 gekoppelt, wobei beide Elemente 10 und 13 mit dem Rotor 5 drehfest verbunden sind.

Die Verbindung der Ankerscheibe 13 und des Dauermagnetträgers 10 mit dem Rotor 5 kann z.B. über eine Feder 14 folgen, wodurch der Dauermagnetträger 10 und die Ankerscheibe 13 nach wie vor eine axiale Bewegung entlang der Achse der Antriebswelle 3 ausführen können. Es ist jedoch auch denkbar, dass die Kupplung mit dem Rotor 5 über eine Führungseinheit, z.B. Führungsstifte erfolgt, die zwar eine rotatorische Relativbewegung unterbinden, jedoch nach wie vor eine axiale Bewegung zulassen.

Die Wasserpumpenkupplung kann in zwei Betriebszuständen betrieben werden:

Sofern eine Spule 15 bestromt wird, entstehen Magnetfeldlinien, die die Ankerscheibe 13 anziehen, so dass diese am Rotor 5 anliegt. Mit dem Anziehen der Ankerscheibe 13 an den Rotor 5 wird gleichzeitig der Distanzring 11 vom Reibbelag 12 getrennt. Dadurch tritt eine Differenzdrehzahl zwischen dem Dauermagnetträger 10 und dem Kühlring 6 auf. Diese Differenzdrehzahl führt zu Wirbelströmen in der Wirbelstromzone 7, so dass der Kühlring 6 aufgrund des dadurch ausgebildeten Magnetfelds mit einer geringeren Drehzahl als der Dauermagnetträger 10, einer so genannten Schleppdrehzahl angetrieben wird. Zwischen dem Dauermagnetträger 10 und dem Kühlring 6 findet eine Drehmomentübertragung somit berührungsfrei statt, wobei der Kühlring 6 langsamer läuft als der Dauermagnetträger 10. Zum Anziehen der Ankerscheibe 13 kann kurzfristig ein vergleichsweise stärkeres Magnetfeld eingesetzt werden, welches sich z.B. durch einen entsprechenden Spannungspuls erzeugen lässt. Sobald die Ankerscheibe 13 am Rotor 5 anliegt, kann die Spannung der Spule 15 reduziert werden, wenn nunmehr zwischen den Permanentmagneten 9 und dem eingegossenen Stahlring 8 ein vergrößerter Luftspalt besteht und damit die wirkenden Magnetfeldlinien geschwächt sind, die die mit dem Dauermagnetträger 10 verbundene Ankerscheibe 13 in Richtung Kühlring 6 ziehen wollen. Aufgrund der Luftspaltvergrößerung kann somit der Energieaufwand zur Beibehaltung der Position der Ankerscheibe herabgesetzt werden.

Ist die Spule 15 nicht wirksam, z.B. weil ein elektrischer Ausfall stattgefunden hat, tritt folgende Situation ein:

Durch Wegfall des magnetisches Felds der Spule 15 wird die Ankerscheibe 13 zum Kühlring 6 hinbewegt, da die Feldlinien zwischen den Permanentmagneten 9 und dem Stahlring 8 eine Anziehungskraft aufeinander ausüben, welcher keine Gegenkraft entgegensteht. Die axiale Bewegung erfolgt so lange, bis der Distanzring 11 axialen Kontakt mit dem Reibebelag 12 hat. Durch den Reibschluss zwischen dem Reibbelag 12 und dem Distanzring 11 wird der Kühlring 6 im Idealfall mit der gleichen Drehzahl wie die Riemenscheibe 4 und der Rotor 5 angetrieben. In diesem Fall ist die Wasserpumpe direkt zugeschaltet. Denkbar ist auch, dass der Reibschluss einen gewissen Schlupf zwischen dem Kühlring 6 und dem Distanzring 11 zulässt.

Zusätzlich kann auch eine Feder oder ein anderes Element vorgesehen werden, das eine elastische Andrückkraft erzeugen kann, um bei nicht bestromter Spule 15 die Ankerscheibe 13 zum Kühlring zu drängen und diese in einen Reibschluss zu versetzen.

Ein Reibschlusszustand kann, wie bereits oben ausgeführt, eintreten durch bewusstes Abschalten der Spule 15 oder durch eine Störung, bei welcher die Spule 15 nicht wie beabsichtigt bestromt ist. Dabei ist jedoch immer ein sicherer Betrieb der Wasserpumpenkupplung gewährleistet, da die Wasserpumpe über den Reibschluss angetrieben wird.

### Bezugszeichenliste:

- 1: Wasserpumpenkupplung
- 2: Wasserpumgengehäuse
- 3: Antriebswelle
- 4: Riemenscheibe
- 5: Rotor
- 6: Kühlring
- 7: Wirbelstromzone
- 8: Stahlring
- 9: Permanentmagnet
- 10: Dauermagnetträger
- 11: Distanzring
- 12: Reibbelag
- 13: Ankerscheibe
- 14: Feder
- 15: Spule
- 16: Kugellager
- 17: Kugellager
- 18: Kugellager
- 19: Kugellager
- 20: Kugellager
- 21: Kugellager
- 22: Kugellager

## Patentansprüche

1. Elektromagnetisch betätigbare Kupplung (1) für eine Wasserpumpe des Kühlwasserkreislaufs eines Verbrennungsmotor mit einem Antriebsrad (4), das im Bereich oder an der Wasserpumpe drehbar gelagert werden kann sowie einer Ankerscheibe (13), die mit einer Spule (15) zusammenwirkt, **dadurch gekennzeichnet, dass** die Ankerscheibe (13) und ein Funktionsteil (10) einer Wirbelstromkupplung mit dem Antriebsrad (4) derart in Verbindung steht, dass das Antriebsrad (4), die Ankerscheibe (13) und das erste Funktionsteil (10) bei Rotation gleich laufen, wobei die Ankerscheibe (13) mit dem ersten Funktionsteil (10) der Wirbelstromkupplung axial durch Bestromung der Spule (15) bewegbar ist, dass ein zweites Funktionsteil (6) der Wirbelstromkupplung vorgesehen ist, das zur festen Anordnung auf einer Welle (3), die mit der Wasserpumpe gekoppelt ist, ausgebildet ist, und dass Reibmittel (12) zwischen dem ersten und zweiten Funktionsteil vorgesehen sind, wobei in Abhängigkeit des Abstandes zwischen dem ersten Funktionsteil (10) und dem zweiten Funktionsteil (6) durch axiales Verschieben des ersten Funktionsteil (10) ein Reibschluss zwischen den beiden Funktionsteilen (6, 10) durch die Reibmittel (12) ausbildbar ist.

2. Kupplung nach Anspruch 1, **dadurch gekennzeichnet, dass** ein Funktionsteil (10) ein Rotationselement mit Dauermagneten (9) umfasst.

3. Kupplung nach Anspruch 1 oder 2, **dadurch gekennzeichnet, dass** ein Funktionsteil (6) ein Rotationselement mit einer Wirbelstromzone (7) umfasst.

4. Kupplung nach einem der vorhergehenden Ansprüche, **dadurch gekennzeichnet, dass** die Wirbelstromzone (7) im zweiten Funktionsteil (6) ausgebildet ist.

5. Kupplung nach einem der vorhergehenden Ansprüche, **dadurch gekennzeichnet, dass** am zweiten Funktionsteil (6) ein Kühlorgan ausgebildet ist.

6. Kupplung nach einem der vorhergehenden Ansprüche, **dadurch gekennzeichnet, dass** die Reibmittel einen Reibbelag (12) umfassen.

7. Kupplung nach einem der vorhergehenden Ansprüche, **dadurch gekennzeichnet, dass** am ersten Funktionsteil (10) Permanentmagnete (9) angeordnet sind.

8. Wasserpumpe mit einer elektromagnetischen betätigbaren Kupplung nach einem der vorhergehenden Ansprüche.

## Claims

1. Electromagnetically actuable clutch (1) for a water pump of the cooling water circuit of an internal combustion engine, comprising a drive wheel (4), which can be rotatably mounted in the area or on the water pump and an armature disc (13), which cooperates with a coil (15), **characterised in that** the armature disc (13) and a functional element (10) of an eddy current coupling are connected to the drive wheel (4), such that the drive wheel (4), the armature disc (13) and the first functional element (10) run synchronously in rotation, wherein the armature disc (13) with the first functional element (10) of the eddy current coupling can be moved axially by energising the coil (15), **in that** a second functional element (6) of the eddy current coupling is provided, which is designed to be fixed onto a shaft (3) which is coupled to the water pump, and **in that** frictional means (12) are provided between the first and second functional element, wherein depending on the distance between the first functional element (10) and the second functional element (6) by axial displacement of the first functional element (10) a frictional closure can be formed between the two functional elements (6, 10) by the frictional means (12).

2. Clutch according to claim 1, **characterised in that** a functional element (10) comprises a rotational element with permanent magnets (9).

3. Clutch according to claim 1 or 2, **characterised in that** a functional element (6) comprises a rotational element with an eddy current zone (7).

4. Clutch according to one of the preceding claims, **characterised in that** the eddy current zone (7) is formed in the second functional element (6).

5. Clutch according to one of the preceding claims, **characterised in that** a cooling element is formed on the second functional element (6).

6. Clutch according to one of the preceding claims, **characterised in that** the frictional means comprise a friction lining (12).

7. Clutch according to one of the preceding claims, **characterised in that** permanent magnets (9) are arranged on the first functional element (10).

8. Water pump comprising an electromagnetically actuable clutch according to one of the preceding claims.

## Revendications

1. Embrayage à commande électromagnétique (1) pour une pompe à eau d'un circuit d'eau de refroidissement d'un moteur à combustion interne comportant une roue d'entraînement (4) montée à rotation au niveau de la pompe à eau ou sur celle-ci, ainsi qu'un disque-induit (13) coopérant avec une bobine (15),
embrayage **caractérisé en ce que**
- le disque-induit (13) et une pièce fonctionnelle (10) d'un embrayage à courants de Foucault coopèrent avec la roue d'entraînement (4) de façon que la roue d'entraînement (4), le disque-induit (13) et la première pièce fonctionnelle (10) tournent en synchronisme,
* le disque-induit (13) étant mobile avec la première pièce fonctionnelle (10) de l'embrayage à courants de Foucault, axialement, par l'alimentation de la bobine (15),
- une seconde pièce fonctionnelle (6) équipe l'embrayage à courants de Foucault, cette pièce étant conçue pour être installée de manière fixe sur un arbre (3) couplé à la pompe à eau, et
- des moyens de friction (12) sont prévus entre la première et la seconde pièce fonctionnelle,
* et en fonction de la distance entre la première pièce fonctionnelle (10) et la seconde pièce fonctionnelle (6), le coulissement axial de la première pièce fonctionnelle (10) réalise une liaison par friction entre les deux pièces fonctionnelles (6, 10) par les moyens de friction (12).

2. Embrayage selon la revendication 1,
**caractérisé en ce qu'**
une pièce fonctionnelle (10) comporte un élément rotatif avec des aimants permanents (9).

3. Embrayage selon la revendication 1 ou 2,
**caractérisé en ce qu'**
une pièce fonctionnelle (6) comprend un élément de rotation avec une zone à courants de Foucault (7).

4. Embrayage selon l'une des revendications précédentes,
**caractérisé en ce que**
la zone à courants de Foucault (7) est réalisée dans la seconde pièce fonctionnelle (6).

5. Embrayage selon l'une des revendications précédentes,
**caractérisé par**
un organe de refroidissement sur la seconde pièce fonctionnelle (6).

6. Embrayage selon l'une des revendications précédentes,
**caractérisé en ce que**
les moyens de friction comportent une garniture de friction (12).

7. Embrayage selon l'une des revendications précédentes,
**caractérisé en ce que**
la première pièce fonctionnelle (10) comporte des aimants permanents (9).

8. Pompe à eau équipée d'un embrayage à commande électromagnétique selon l'une des revendications précédentes.
